# EUROPÄISCHE PATENTSCHRIFT

(11) **EP 2 650 102 B1**
(45) Veröffentlichungstag und Bekanntmachung des Hinweises auf die Patenterteilung: **29.07.2015**
(21) Anmeldenummer: 13163133.5
(22) Anmeldetag: 10.04.2013
(51) Int. Cl.: B29C 49/42

(54) **Vorrichtung und Verfahren zum Halten von Behältnissen**
Method and device for transporting containers
Dispositif et procédé destinés au support de récipients

(30) Priorität: 11.04.2012 DE 102012103114
(43) Veröffentlichungstag der Anmeldung: 16.10.2013
(73) Patentinhaber: Krones AG, 93073 Neutraubling (DE)
(72) Erfinder: Schmitt, Robert, 93073 Neutraubling (DE); Loy, Michael, 93073 Neutraubling (DE)
(74) Vertreter: Bittner, Bernhard

(56) Entgegenhaltungen:
- WO-A1-2011/015371
- DE-A1-102006 012 020
- DE-A1-102008 062 315
- JP-A- H0 280 225

## Beschreibung

Die vorliegende Erfindung bezieht sich auf eine Vorrichtung und ein Verfahren zum Halten von Behältnissen zumindest während eines Transportvorganges und/oder eines Bearbeitungsvorganges der Behältnisse gemäß dem Oberbegriff des Anspruches 1 bzw. dem Oberbegriff des Anspruches 13.

Aus dem allgemeinen Stand der Technik ist bekannt, dass vornehmlich aus Kunststoffbehältnisvorformlingen bzw. -preforms mittels eines entsprechenden Streck-/Blasprozesses Kunststoffbehältnisse expandiert bzw. geformt werden, wobei die einzelnen zu behandelnden Vorformlinge sowie auch die daraus expandierten Behältnisse zudem im weiteren Produktionsprozess zusätzlichen unterschiedlichen Behandlungsprozessen bzw. -schritten, wie beispielsweise einem Erwärmungsprozess und/oder einem Sterilisationsprozess und/oder einem Etikettierprozess und/oder einem Befüllungsprozess mit einem entsprechenden Medium und/oder einem Verschließprozess unterzogen werden können.

Um folglich den einzelnen Bearbeitungsstationen zugeführt werden zu können, müssen die Behältnisse bzw. die Vorformlinge über entsprechend geeignete Handhabungssysteme transportiert werden. Ein Beispiel eines derartigen Handhabungssystem ist in der Druckschrift WO2011/015371 dergelegt. Ein weiteres Beispiel eines derartigen Handhabungssystem ist beispielsweise in der DE 10 2006 012 020 A1 aufgezeigt, in welcher u.a. eine aus zwei Klammerarmen bestehende Klammer aufgeführt ist, welche das zu transportierende Behältnis an dessen Umfang im Mündungsbereich erfasst. Zudem sind die Klammerarme des hierin beschriebenen Greifsystems zueinander - in Längsrichtung des Behälter betrachtet - höhenversetzt angeordnet, so dass die durch die Klammerarme auf den Behälter aufgebrachte Greifkraft schräg durch den Vorformling geleitet wird. Bei der Übergabe des transportierten Behältnisses übernimmt folglich eine gegengleich konstruktiv ausgestaltete Klammer den Vorformling bzw. das Behältnis. Demnach kann das gesamte Handhabungssystem der gesamten Bearbeitungsanlage lediglich derartig ausgestaltete Klammern aufweisen, so dass folglich die Bearbeitungsanlage vollständig angepasst werden muss und eine Verwendung beispielsweise von Standard-Einfachklammern, wie diese aus dem allgemeinen Stand der Technik bekannt sind, nicht mehr ermöglicht wird.

Die oben beschriebene Klammer sowie auch die Standard-Einfachklammern zum Halten und Transportieren von Behältnissen, wie beispielsweise Vorformlingen, erfordern zudem eine am Ende des Mundstücks des Behältnisses angeordnete Wulst, den Tragring. Während bei der Handhabung von bereits expandierten Behältnissen ein Greifen eines Klammerelementes oberhalb sowie auch unterhalb des Tragrings möglich ist, dürfen dagegen noch nicht expandierte Behältnisse, wie Vorformlinge vorzugsweise lediglich oberhalb dieses Tragrings gegriffen und gehalten werden, um eine Berührung des erwärmten bzw. zu erwärmenden Bereichs zu vermeiden. Denn insbesondere eine Kontaktierung der Klammer bzw. deren Klammerarme mit dem erwärmten Bereich des Vorformlings könnte Beschädigungen im Kunststoff des Vorformlings hinterlassen, wodurch dessen Qualität bzw. die Qualität des daraus entstehenden Behältnisses negativ beeinflusst wird. Demnach liegt der Greifbereich eines Vorformlings vorzugsweise zwischen dem Tragring und einem in Längsrichtung des Vorformlings betrachtet, oberhalb des Tragrings angeordneten Abrissrings, an welchem beispielsweise der Verschluss des späteren expandierten Behältnisses gesichert ist. Der Begriff Abrissring definiert sich hier insbesondere als eine Wulst zwischen dem Tragring und dem an der Behältnismündung angebrachten Gewinde.

Werden folglich derartige Standard-Einfachklammern zum Greifen und Halten von Vorformlingen eingesetzt, welche den gesamten Bereich zum Eingreifen der Klammer - insbesondere in Längsrichtung des Vorformlings betrachtet - vollständig ausfüllen, um beispielsweise durch den Abrissring und den Tragring den Vorformling in der Höhe zu fixieren, ist eine Übergabe von einer Transfereinheit bzw. von einem Handhabungssystem zum nächsten mit einem derartigen Greifsystem, ohne ein Eingreifen unterhalb des Tragringes, nicht realisierbar. Bei der Verwendung von Standard-Einfachklammern wird demnach der Vorformling von dem Klammersystem an einen Greifdorn und vice versa übertragen, welcher von oben in das Mundstück des Vorformlings eingeführt wird und demnach den Vorformling an dessen Innendurchmesser greift. Jedoch ist ein derartiger Greifdorn nicht in jedem Behandlungsprozess anwendbar, wie beispielsweise bei der Vorformlingsterilisation, bei welcher z.B. eine Berührung des Innendurchmessers mit dem Greifdorn zu vermeiden ist, um eine vollständige Sterilisation der Oberfläche des Vorformlings mit dem Sterilisationsmedium, insbesondere H₂O₂-Prozessgas, zur geforderten Keimreduzierung zu gewährleisten.

Demnach ist es die Aufgabe der vorliegenden Erfindung eine Vorrichtung bzw. ein Handhabungssystem und ein Verfahren zum Halten bzw. Transportieren von Behältnissen, wie insbesondere Vorformlingen zur Verfügung zu stellen, bei welchem das Behältnis in jedem bzw. vor jedem Behandlungsprozess bzw. -schritt von einem Klammersystem zu einem anderen Klammersystem übertragen werden kann, ohne dass das Behältnis unterhalb des Tragrings gegriffen werden muss und/oder ohne, dass der Innendurchmesser des Mundstücks berührt wird, wobei das Handhabungssystem in eine bestehende Behandlungsanlage zur Behandlung von Behältnissen integrierbar ist, ohne die gesamte Anlage auf ein neues Greifsystem umrüsten zu müssen.

Diese Aufgabe löst die vorliegende Erfindung mittels einer Vorrichtung gemäß Anspruch 1 und einem Verfahren gemäß Anspruch 13. Vorteilhafte Ausführungsformen und Weiterbildungen sind Gegenstand der Unteransprüche.

Demzufolge wird eine Vorrichtung zum Halten von Behältnissen zumindest während eines Transportvorganges und/oder eines Bearbeitungsvorganges der Behältnisse beansprucht, wobei die Behältnisse zumindest im Mündungsbereich einen vorzugsweise in radialer Richtung hervorstehenden Ringabschnitt, insbesondere einen umlaufenden Ring und/oder insbesondere einen Tragring und/oder einen in eine Längsrichtung (L) des Behältnisses zum Tragring beabstandet angeordneten Abrissring aufweisen. Die erfindungsgemäße Vorrichtung weist ein Klammerelement mit mindestens zwei Klammerelementarmen auf, wobei wenigstens einer der Klammerelementarme (und bevorzugt beide) mindestens ein erstes Halteelement und ein zweites Halteelement aufweist, wobei die Halteelemente derart gestaltet sind, dass diese zumindest zeitweise gleichzeitig und zumindest abschnittsweise in der Längsrichtung (L) des Behältnisses zueinander versetzte und in Umfangsrichtung des Behältnisses zueinander beabstandete Bereich des Behältnisses kontaktieren und/oder diese in ihrer Position fixieren.

Vorzugsweise weist die erfindungsgemäße Vorrichtung folglich ein Klammerelement mit insgesamt mindestens vier Halteelementen auf, wobei insbesondere zumindest zwei einander gegenüberliegende Halteelemente jedes Klammerelementarmes im Wesentlichen in Längsrichtung des zu haltenden Behältnisses betrachtet in einer Ebene liegen. Es wäre jedoch auch denkbar, dass lediglich zumindest zwei einander gegenüberliegende Halteelemente in einer Ebene liegen, während das andere Paar der einander gegenüberliegenden Halteelemente höhenversetzt zueinander angeordnet ist. Demzufolge wäre es ebenso denkbar, dass beide Paare einander gegenüberliegender Halteelemente höhenversetzt zueinander angeordnet sind. Des Weiteren wäre es möglich, dass mehr als zwei Paar gegenüberliegende Halteelemente an der erfindungsgemäßen Vorrichtung angeordnet sind, wie beispielsweise drei, vier oder mehr Paare gegenüberliegender Halteelemente, so dass beispielsweise jeder Klammerelementarm drei, vier oder mehr Halteelemente aufweist.

Vorzugsweise kontaktieren die Halteelemente der Klammerelementarme das Behältnis in Umfangsrichtung des Behältnisses, welches vorzugsweise ein Vorformling ist, an zwei sich im Wesentlichen gegenüberliegenden Seiten bzw. Bereichen des Behältnisses. Jedoch wäre es auch möglich, dass die Kontaktbereiche, an denen die Halteelemente der Klammerelementarme an das Behältnis eingreifen sich nicht im Wesentlichen gegenüberliegen, sondern vielmehr in Bereichen angeordnet sind, welche weniger oder auch mehr voneinander beabstandet sind, als die zwei im Wesentlichen einander gegenüberliegenden Kontaktbereiche des Umfangsbereiches des Behältnisses.

Auch wäre es denkbar, dass das Behältnis in Umfangsrichtung des Behältnisses in einem Bereich kontaktiert bzw. gehalten wird, welcher wenigstens einem Drittel des Umfangsbereiches des Behältnisses, bevorzugt wenigstens zwei Drittel oder bevorzugt wenigstens drei Viertel des Umfangsbereiches des Behältnisses entspricht. D.h., dass das Behältnis nur abschnittsweise mittels der Halteelemente kontaktiert wird oder auch vollständig von diesen in Umfangsrichtung des Behältnisses im Kontaktbereich der Halteelemente kontaktiert wird.

Vorzugsweise werden die Behältnisse in einer aufrechten Position gehalten und transportiert, in welcher der Mündungsbereich des Behältnisses in Längsrichtung des Behältnisses betrachtet oberhalb dem Bodenbereich des Behältnisses angeordnet ist, so dass die Öffnung des Behältnisses nach oben ausgerichtet ist. Bei einem derartigen Transport der Behältnisse kann z.B. ein Befüllen der Behältnisse mit einem entsprechenden Medium ohne eine Positionsänderung des Behältnisses selbst bewerkstelligt werden.

Demnach wäre es jedoch auch möglich das Behältnis in einer entsprechend umgedrehten

Position zu transportieren bzw. zu halten, in welcher der Mündungsbereich des Behältnisses in Längsrichtung des Behältnisses betrachtet unterhalb dem Bodenbereich des Behältnisses angeordnet ist, so dass beispielsweise ein Spül- und Trocknungsvorgang der Behältnisse zur Vermeidung von Rückständen im Innenbereich der Behältnisse aufgrund der nach unten gerichteten Öffnung des Behältnisses realisiert werden kann.

Es ist des Weiteren denkbar, dass die Behältnisse innerhalb einer gesamten Behandlungsanlage auch in unterschiedlichen Positionen, d.h., vorzugsweise in einer aufrechten Position und in einer umgedrehten Position bewegt werden können, wobei die erfindungsgemäße Vorrichtung vorteilhaft dazu dient die Behältnisse in beiden Positionen, d.h. in einer aufrechten Position sowie in einer umgedrehten Position zu halten und/oder zu transportieren.

Bevorzugt ist die erfindungsgemäße Vorrichtung an einem Sternrad, welches sich um eine zentrale Achse mit einer definierten Geschwindigkeit dreht, oder auch einem Transportband, welches sich entlang eines vorgegebenen Transportpfades mit einer vorgegebenen Geschwindigkeit bewegt, befestigt.

In einer Ausführungsform ist das erste Halteelement geeignet, zumindest abschnittsweise einen Bereich des Abrissrings und/oder einen Bereich in Längsrichtung des Behältnisses über dem Abrissring bis zur Oberkante des Mundstücks, insbesondere in einem Bereich des Gewindeganges am Mündungsstück des Behältnisses zu kontaktieren und/oder das dazu beabstandet angeordnete zweite Halteelement ist geeignet, zumindest abschnittsweise einen Bereich des Tragrings zu kontaktieren.

Das bevorzugt als Klammer ausgeführte Halteelement kann also nicht nur am Abrissring sondern auch oberhalb des Abrissrings, d.h. z.B. am Gewindegang greifen. Auch wäre es denkbar, dass das Halteelement sowohl am Abrissring als auch oberhalb greift. Da der Gewindegang üblicherweise eine gewisse Steigung aufweist, wäre es denkbar, eine Kontur des Halteelements an diese Steigung anzupassen.

Vorzugsweise wird das Behältnis jedoch lediglich an dem Tragring und/oder dem Abrissring kontaktiert bzw. gegriffen, wobei eine Berührung der Wandungen des Behältnisses, insbesondere im Mündungsbereich nicht stattfindet. Gemäß dieser Ausführungsform weist das zu haltende bzw. zu transportierende Behältnis dabei vorzugsweise zumindest einen Tragring und bevorzugt auch einen Abrissring auf und wird demnach im Wesentlichen lediglich indirekt über den Tragring und den Abrissring von der erfindungsgemäßen Vorrichtung gegriffen.

In einer weiteren Ausführungsform ist das erste Halteelement geeignet, zumindest einen Abschnitt des Umfanges des Behältnisses zu kontaktieren, welcher sich in Längsrichtung des Behältnisses unterhalb des Abrissringes erstreckt oder welcher sich in Längsrichtung des Behältnisses oberhalb dem Abrissring bis zur Oberkante des Mundstücks erstreckt und insbesondere einen Bereich des Gewindeganges am Mündungsstück des Behältnisses entspricht und/oder das dazu beabstandet angeordnete zweite Halteelement ist geeignet, zumindest abschnittsweise einen Bereich des Tragrings zu kontaktieren. D.h., dass gemäß dieser Ausführungsform das Behältnis vorzugsweise an einer entsprechenden Wulst des Behältnisses, wie dem Tragring oder beispielsweise auch dem Abrissring (wenn das Behältnis keinen Tragring aufweist) sowie bevorzugt zumindest gleichzeitig auch an einem Wandungsbereich, insbesondere im Mündungsbereich, gegriffen werden kann. Demzufolge wird vorteilhaft das Behältnis zumindest in einem Kontaktbereich des Behältnisses direkt von der erfindungsgemäßen Vorrichtung gegriffen.

Demnach sind die Halteelemente jedes Klammerelementarmes vorzugsweise insbesondere in Längsrichtung des Behältnisses voneinander beabstandet angeordnet, so dass jedes Halteelement eines Klammerelementarmes einen anderen Bereich des Behältnisses kontaktieren bzw. greifen kann. Dies ist zum einen vorteilhaft für einen sicheren und wackelfreien Transport der Behältnisse und dient zum anderen vornehmlich einer Übergabe des Behältnisses an beispielsweise eine Standard-Einfachklammer, wie nachfolgend noch detailliert erläutert wird.

Vorzugsweise weist jeder Klammerelementarm einen Befestigungsbereich zum Befestigen des Klammerelementarmes an einem Tragelement, und einen Klemmbereich zum Kontaktieren zumindest eines Abschnittes des Behältnisses auf. D.h., dass jeder Klammerelementarm der erfindungsgemäßen Vorrichtung an einem Tragelement bzw. einer Trageinrichtung, welche ein Bestandteil der erfindungsgemäßen Vorrichtung sein kann, angeordnet ist, während der Klemmbereich des Klammerelementarmes insbesondere zumindest einem Halteelement des Klammerelementarmes zuzuordnen ist, durch welchen das Behältnis gegen ein Verrutschen und/oder Verkippen während eines Behandlungsvorganges und/oder eines Transportvorganges des Behältnisses gesichert ist.

Insbesondere sofern wenigstens einer der Klammerelementarme einteilig ausgebildet ist, ist folglich der Befestigungsbereich ein für beide Halteelemente eines Klammerelementarms gemeinsamer Befestigungsbereich. Einteilig ausgebildet bedeutet hierbei bevorzugt, dass die Halteelemente des Klammerelementarmes in einem Herstellungsprozess - beispielsweise aus einem Stück - geformt worden sind und nicht durch entsprechende Fügeprozesse zu einem Klammerelementarm zusammengefügt wurden. Dabei ist es jedoch auch denkbar, dass die Klammerelementarme oder zumindest eines der Klammerelementarme mehrteilig ausgebildet ist, so dass beispielsweise jedes Halteelement sowie auch der Befestigungsbereich durch entsprechende Fügeverfahren, wie Schweißen, Kleben, Schrauben, Nieten usw. zu einem gemeinsamen Klammerelementarm zusammengefügt sind.

Die Klammerelementarme und/oder die Halteelemente bestehen beispielsweise zumindest bereichsweise aus einem vornehmlich strapazierfähigen, umweltfreundlichen und/oder witterungsbeständigen bzw. korrosionsfreien Material, wie beispielsweise Kunststoff, Aluminium oder Metallen mit oder ohne entsprechende Legierungen.

Vorzugsweise sind die Klammerelementarme aktiv oder passiv steuerbar. So ist es denkbar, dass bei einer passiven Steuerung der Klammerelementarme diese sich lediglich erst dann öffnen, wenn ihnen ein Behältnis übergeben wird. D.h., dass mittels beispielsweise entsprechend an den Klammerelementarmen bzw. den Haltelementen ausgebildeten Einführschrägen durch den Druck, aufgebracht durch die an die Vorrichtung übergebenen Behältnisse, sich die Klammerelementarme folglich bei einem Zwischenschieben der Behältnisse zwischen die Klammerelementarme gegen eine vornehmlich aufgebrachten Vorspannung öffnen.

Bei einer aktiven Steuerung der Klammerelementarme ist es beispielsweise denkbar, dass die zueinander bzw. voneinander weg geführte Bewegung der Klammerelementarme durch eine Kurvensteuerung bewerkstelligt wird. Bevorzugt wird die Bewegung der Klammerelementarme durch eine Kurvensteuerung und/oder einen Hebelmechanismus erreicht. Auch ist es denkbar, dass die oben beschriebene Bewegung der Klammerelementarme durch Hydraulikventile und/oder Luftventile realisiert wird, wobei die hierfür vornehmlich zusätzlich benötigten Einheiten, wie beispielsweise Steuer- und/oder Regelungseinrichtungen, Sensoren usw. dabei Anteile bzw. Bestandteile der erfindungsgemäßen Vorrichtung selbst oder auch beabstandet zu dieser auf beispielsweise einem Tragelement, welches die Vorrichtung in einer definierten Position hält, angeordnet sein können.

In einer bevorzugten Ausführungsform ist das Behältnis durch zumindest ein Halteelement von wenigstens einem der Klammerelementarme kraftschlüssig und/oder formschlüssig erfassbar. D.h., dass es denkbar ist, dass das Behältnis lediglich kraftschlüssig oder formschlüssig oder auch kraft- und formschlüssig durch eines oder durch mehrere Halteelemente gegriffen und gehalten werden kann. Demnach ist es beispielsweise möglich, dass eines der Halteelemente oder auch eines der sich im Wesentlichen gegenüberliegenden Haltelementpaare einen ersten Bereich des Behältnisses kraftschlüssig hält, während beispielsweise ein anderes Haltelement oder ein anderes sich gegenüberliegendes Halteelementpaar einen anderen, zum ersten Bereich in Längsrichtung des Behältnisses beabstandeten Bereich formschlüssig greifen und halten kann. Es ist auch denkbar, dass alle Bereiche des Behältnisses mittels den Halteelementen lediglich formschlüssig oder lediglich kraftschlüssig gehalten werden, oder das ein Halteelement eines Klammerelementarmes einen Bereich kraftschlüssig hält, während ein diesem Haltelement gegenüberliegendes Halteelement eines anderen Klammerelementarmes den Bereich formschlüssig hält. Demnach sind unterschiedlichste Möglichkeiten zur Ausgestaltung der Haltelemente und deren Haltung des Behältnisses denkbar.

Vorzugsweise weist die erfindungsgemäße Vorrichtung ein Vorspannelement auf, um die Klammerelementarme vorzuspannen. Dabei ist es denkbar, dass dieses Vorspannelement ein Federelement, wie beispielsweise eine Schraubfeder und insbesondere Zug- oder Druckfeder, und/oder ein magnetisches Element ist. D.h., dass ein Vorspannen des Klammerelementes bzw. der sich gegenüberliegenden Klammerelementarme vorzugsweise mittels im Wesentlichen zwischen oder an den einzelnen Klammerelementarmen angeordneten Magneten, welche eine zueinander abstoßende oder auch anziehende Wirkung aufweisen, realisiert wird.

In einer weiteren bevorzugten Ausführungsform weist das zweite Halteelement einen Auflagebereich zum Sichern des Behältnisses gegen eine Verschiebung in vertikaler Richtung, d.h. in Längsrichtung des Behältnisses und/oder einen Begrenzungsbereich zum Begrenzen einer Verschiebung des Behältnisses in horizontaler, d.h. in radialer Richtung und/oder in vertikaler Richtung, d.h. in Längsrichtung des Behältnisses auf. Insbesondere ist das zweite Halteelement dabei ein Halteelement, welches einen Bereich des Tragrings des Behältnisses kontaktiert bzw. greift, vorzugsweise ohne dabei die Wandung des Behältnisses zu berühren.

Es ist jedoch auch denkbar, dass das erste Halteelement einen entsprechenden Auflagebereich und/oder Begrenzungsbereich aufweist, um damit den Abrissring des Behältnisses, sofern das Behältnis in einer aufrechten Position gehalten und transportiert wird, oder den Tragring, sofern das Behältnis in einer umgedrehten Position gehalten und transportiert wird, zu greifen bzw. zu kontaktieren.

Der Auflagebereich erstreckt sich dabei zumindest abschnittsweise im Wesentlichen radial in Richtung des Behältnisses, während sich der Begrenzungsbereich dabei zumindest abschnittsweise im Wesentlichen in Längsrichtung des Behältnisses erstreckt und gegebenenfalls auch zumindest abschnittsweise im Wesentlichen in radialer Richtung des Behältnisses. Demnach bilden der Auflagebereich und der Begrenzungsbereich eine im Wesentlichen L-förmige Form im Querschnitt, welche zumindest einen äußeren Bereich des Tragrings und/oder einen äußeren Bereich des Abrissrings zumindest abschnittsweise umgibt.

In einer weiteren bevorzugten Ausführungsform weist das erste Halteelement einen Anlagerungsbereich zum Verhindern eines Verkippens des Behältnisses und/oder einer Verschiebung des Behältnisses in vertikaler Richtung, d.h. in Längsrichtung des Behältnisses auf. Dabei ist das erste Halteelement vorzugsweise das Haltelement, welches lediglich den Abrissring oder einen von dem Tragring in Längsrichtung des Behältnisses beabstandeten Wandungsbereich des Behältnisses kontaktiert, insbesondere wenn das Behältnis in einer aufrechten Position gehalten und transportiert wird.

Wird das Behältnis in einer umgedrehten Position transportiert, ist es möglich, dass der Anlagerungsbereich an dem Tragring oder einem vom Abrissring in Längsrichtung des Behältnisses beabstandeten Wandungsbereich des Behältnisses angreift bzw. diesen kontaktiert.

Dadurch wird vorteilhaft erreicht, dass Behältnisse mit oder ohne Tragring bzw. mit oder ohne Abrissring in einer aufrechten Position sowie auch in einer umgedrehten Position mittels der erfindungsgemäßen Vorrichtung zum Halten bzw. Transportieren von Behältnissen gehalten bzw. transportiert werden können.

Vorzugsweise ist das erste Halteelement des jeweiligen Klammerelementarmes in Längsrichtung des Behältnisses betrachtet oberhalb dem zweiten Halteelement angeordnet. Weist die erfindungsgemäße Vorrichtung zumindest einen Klammerelementarm mit mindestens drei Halteelementen auf, so ist das dritte Halteelement vorzugsweise in Längsrichtung des Behältnisses betrachtet unterhalb dem zweiten Halteelement - sofern zumindest das Behältnis in einer aufrechten Position gehalten und ggf. transportiert wird - und besonders bevorzugt jeweils dem Bodenbereich des Behältnisses zugeordnet angeordnet.

Wie oben bereits erwähnt sind das erste Halteelement und das zweite Halteelement von zumindest einem Klammerelementarm bevorzugt in Längsrichtung des Behältnisses derart beabstandet voneinander bzw. zueinander angeordnet, dass zwischen dem ersten Halteelement und dem zweiten Halteelement ein Zwischenraum ausgebildet ist.

Dieser Zwischenraum entspricht vorzugsweise dem Abstand zwischen dem Tragring und dem Abrissring des Behältnisses, sofern ein Behältnis beide Ausstülpungen (Wülste) aufweist. Ansonsten entspricht dieser Zwischenraum dem Abstand zwischen dem Tragring oder dem Abrissring und dem Wandungsbereich des Behältnisses, an welchem das Behältnis mittels des entsprechenden Haltelements kontaktiert wird.

Dieser Zwischenraum dient vorteilhaft als Greifbereich beispielsweise einer Standard-Einfachklammer, wie diese aus dem allgemeinen Stand der Technik hinreichend bekannt ist, um das Behältnis dieser Standard-Einfachklammer zu übergeben oder auch von dieser zu übernehmen.

Des Weiteren wird ein Verfahren zum Halten von Behältnissen zumindest während eines Transportvorganges und/oder eines Bearbeitungsvorganges der Behältnisse beansprucht, wobei die Behältnisse zumindest einen in einem Mündungsbereich befindlichen Tragring und/oder einen zum Tragring in Längsrichtung des Behältnisses beabstandet angeordneten Abrissring aufweisen. Gemäß dem erfindungsgemäßen Verfahren wird das Behältnis mittels einer Vorrichtung zum Halten von Behältnissen, welche wenigstens ein mindestens zwei Klammerelementarme aufweisendes Klammerelement aufweist, im Mündungsbereich des Behältnisses gegriffen, wobei ein erstes Halteelement eines der Klammerelementarme zumindest abschnittsweise einen Bereich des Mündungsbereiches des Behältnisses oder einen Bereich des Abrissrings kraftschlüssig und/oder formschlüssig kontaktiert, während ein zweites Halteelement eines der Klammerelementarme zumindest abschnittsweise einen Bereich des Tragrings kraftschlüssig und/oder formschlüssig kontaktiert, wobei das Behältnis mittels den Halteelementen im Wesentlichen an zwei sich in Längsrichtung des Behältnisses voneinander beabstandeten und in Umfangsrichtung des Behältnisses voneinander beabstandeten Bereiche des Behältnisses gegriffen wird.

Vorzugsweise greift in einem Übergabebereich des Behältnisses ein weiteres zumindest zwei Klammerelementarme aufweisendes Klammerelement in einen durch die in Längsrichtung des Behältnisses voneinander beabstandet angeordneten Halteelemente zumindest eines Klammerelementarmes gebildeten Zwischenraum ein, um das Behältnis von der Vorrichtung zu übernehmen oder der Vorrichtung zu übergeben, um das Behältnis einem weiteren nachfolgenden Behandlungsschritt zuführen oder in die Behandlungsanlage aufnehmen oder aus der Behandlungsanlage ausgeben zu können.

Vorzugsweise ist das Behältnis ein Vorformling, so dass das Klammerelement bevorzugt einen Vorformling zumindest während eines Transportvorganges und/oder Bearbeitungsvorganges des Vorformlings greift und/oder hält.

Weitere Vorteile, Ziele und Eigenschaften der vorliegenden Erfindung werden anhand nachfolgender Beschreibung anliegender Zeichnung erläutert, in welcher beispielhaft Ausführungsformen der erfindungsgemäßen Vorrichtung sowie auch eine Ausführungsform eines Standard-Einfachklammerelementes dargestellt wird.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig.1: eine Prinzipskizze einer Ausführungsform einer aus dem allgemeinen Stand der Technik bekannten Standard-Einfachklammer;
- Fig.2: eine Prinzipskizze eines Längsschnittes durch eine erste Ausführungsform der erfindungsgemäßen Vorrichtung während des Haltens eines Behältnisses;
- Fig.3: eine Prinzipskizze eines Längsschnittes durch eine zweiten Ausführungsform der erfindungsgemäßen Vorrichtung während des Haltens eines Behältnisses, und
- Fig.4: eine Prinzipskizze einer Ausführungsform der erfindungsgemäßen Vorrichtung, wie beispielsweise in Figur 2 gezeigt, beim Übergabevorgang des Behältnisses an oder von einer Ausführungsform einer Standard-Einfachklammer, wie beispielsweise in Figur 1 gezeigt.

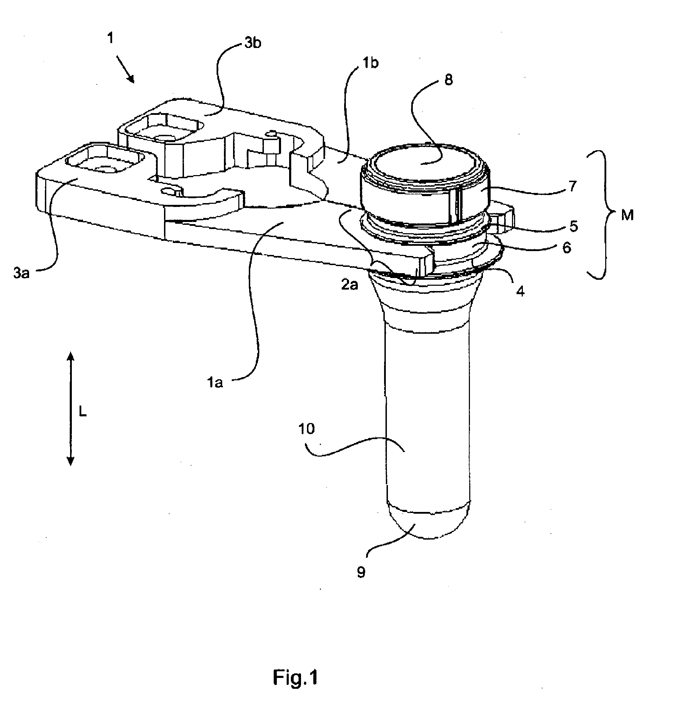

Fig.1 zeigt eine Prinzipskizze einer Ausführungsform einer aus dem allgemeinen Stand der Technik bekannten Standard-Einfachklammer 1, welche zwei sich gegenüberliegende Einfachklammerarme 1 a und 1 b aufweist, die jeweils einen Klemmbereich 2a (der Klemmbereich des Einfachklammerarmes 1 b ist durch das Behältnis 10 verdeckt) und einen Befestigungsbereich 3a bzw. 3b aufweisen. Der jeweilige Klemmbereich 2a der Einfachklammerarme 1 a, 1 b umschließt einen Bereich des Behältnisses 10, welches insbesondere ein Vorformling 10 ist, zumindest teilweise, so dass der Vorformling 10 zumindest abschnittsweise in Umfangsrichtung von dem jeweiligen Klemmbereich 2a der Einfachklammerarme 1a, 1 b kontaktiert wird. Jedoch wird, wie in Figur 1 deutlich gezeigt, insbesondere der sich zwischen dem Tragring 4 und dem Abrissring 5 in Längsrichtung L des Behältnisses 10 erstreckende Bereich 6, welcher auch als Greifbereich 6 der Einfachklammer 1 verstanden wird, fast vollständig - zumindest in Längsrichtung L - von den Einfachklammerarmen 1a, 1 b beim Halten des Behältnisses 10 ausgefüllt. Eine Übergabe des Behältnisses 10 an eine weitere Einzelklammer (hier nicht gezeigt) wäre - sofern ein Eingreifen dieser zweiten Einfachklammer unterhalb des Tragrings 4 und oberhalb des Abrissrings 5, wo sich vorzugsweise das Gewinde 7 (Außengewinde) des Behältnisses 10 befindet, ausgeschlossen werden soll - nicht möglich.

Der in Figur 1 gezeigte Vorformling 10 wird in einer aufrechten Position gehalten bzw. transportiert, bei welcher die Mündungsöffnung 8 in Längsrichtung L oberhalb des Bodenbereiches 9 des Behältnisses 10 liegt.

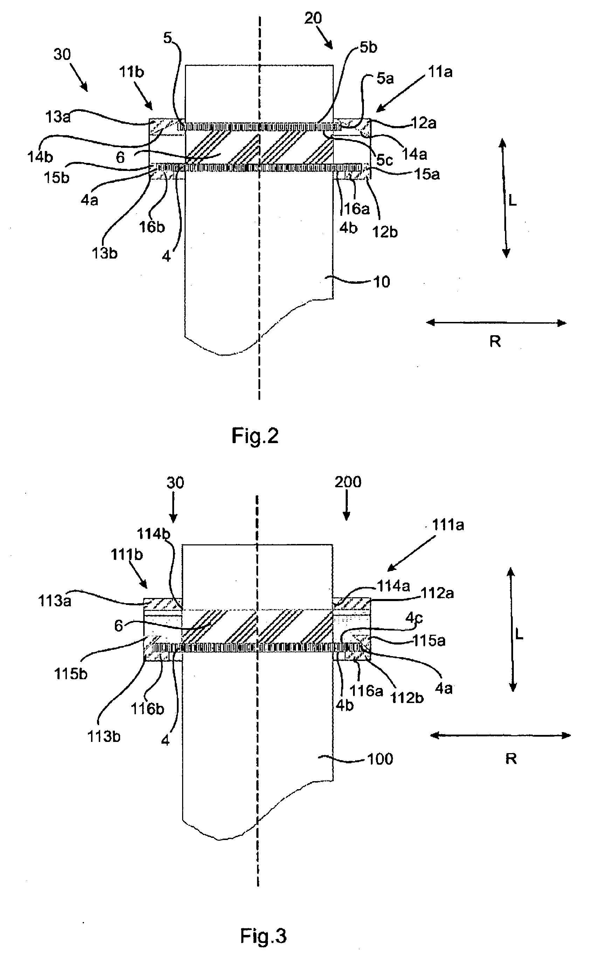

In der Figur 2 ist eine Prinzipskizze eines Längsschnittes durch eine erste Ausführungsform der erfindungsgemäßen Vorrichtung 20 während des Haltens eines Behältnisses 10 gezeigt, wobei von der Vorrichtung 20 selbst hierbei lediglich die geschnittenen Klammerelementarme 11 a, 11 b gezeigt sind. Jeder der Klammerelementarme 11 a, 11 b weist hierbei zwei Halteelemente 12a, 12b bzw. 13a, 13b auf, wobei insbesondere die mit dem Bezugszeichen 12a und 13a gekennzeichneten Halteelemente die ersten Halteelemente 12a, 13a und die mit dem Bezugszeichen 12b, 13b gekennzeichneten Halteelemente die zweiten Halteelemente 12b, 13b darstellen.

Der in Figur 2 gezeigte Vorformling 10 weist auch hier einen Tragring 4 und einen zu dem Tragring 4 in Längsrichtung L des Behältnisses 10 beabstandet angeordneten Abrissring 5 auf.

Gemäß der in Figur 2 gezeigten Ausführungsform der erfindungsgemäßen Vorrichtung 20 ist zumindest ein Bereich und vorzugsweise das gesamte erste Halteelement 12a bzw. 13a derart gestaltet, dass dieses bevorzugt einen dreiecksförmigen Querschnitt in Form eines rechtwinkligen Dreiecks aufweist, wobei der Anlagerungsbereich 14a bzw. 14b vornehmlich der Hypotenuse des Dreiecks entspricht. Damit verläuft der Anlagerungsbereich 14a bzw. 14b bevorzugt schräg gegenüber einer in der Längsrichtung L des Behältnisses 10 senkrecht stehenden Ebene. Durch diese Schrägflächen wird das Behältnis 10 folglich vorzugsweise in Längsrichtung L nach unten gedrückt.

Dabei liegt der jeweilige Anlagerungsbereich 14a, 14b der ersten Halteelemente 12a, 13a vornehmlich an einem äußeren Bereich des Abrissrings 5 derart an, dass der Abrissring 5 zumindest abschnittsweise an dessen sich im Wesentlichen in Längsrichtung L erstreckende Wandung 5a und/oder zumindest abschnittsweise an dessen sich im Wesentlichen in radialer Richtung R erstreckende Wandung 5b anliegt, wobei die mit dem Bezugszeichen 5b gekennzeichnete Wandung eine in Richtung des Gewindes (hier nicht gezeigt) des Behältnisses 10 ausgerichtete Wandung ist, welche der mit dem Bezugszeichen 5c gekennzeichneten Wandung des Abrissringes 5 gegenüberliegt, die in Richtung des Greifbereiches 6 der Einfachklammer 1 ausgerichtet ist. Demzufolge ist das erste und in dieser Ausführungsform obere Haltelement 12a, 13a des jeweiligen Klammerelementarmes 11a, 11 b derart an dem Abrissring 5 angeordnet und entsprechend ausgestaltet, dass ein Verkippen des Behältnisses 10 sowie auch ein Verrutschen des Behältnisses 10 in im Wesentlichen radialer Richtung R des Behältnisses 10 und/oder nach oben verhindert wird.

Die radiale Richtung R muss sich hierbei nicht zwingend parallel zur Horizontallinie erstrecken, sondern kann auch in einem Winkel von dieser abweichen und sich damit folglich windschief zur Horizontallinie bzw. zur Horizontalebene erstrecken.

Das zweite Halteelement 12b bzw. 13b des jeweiligen Klammerelementarmes 11 a bzw. 11 b ist in Längsrichtung L von dem ersten Halteelement 12a bzw. 13a des jeweiligen Klammerelementarmes 11 a bzw. 11 b beabstandet angeordnet und kontaktiert zumindest abschnittsweise einen Bereich des Tragrings 4. Dazu weist das jeweilige zweite Halteelement 12b, 13b jeweils einen Begrenzungsbereich 15a bzw. 15b und einem Auflagebereich 16a bzw. 16b auf. Der jeweilige Auflagebereich 16a, 16b erstreckt sich vornehmlich im Wesentlichen in radialer Richtung R, so dass zumindest ein äußerer Bereich des Tragrings 4, und im Wesentlichen ein Abschnitt einer Wandung 4b, welche sich folglich auch im Wesentlichen in radialer Richtung R erstreckt, von diesem Auflagebereich 16a, 16b kontaktiert wird. Dabei liegt der Tragring 4 derart auf dem Auflagebereich 16a, 16b des jeweiligen zweiten Halteelementes 12b, 13b auf, dass dieser Auflagebereich 16a, 16b ein Verrutschen des Behältnisses 10 in Längsrichtung L, bevorzugt nach unten hinweg, verhindert und somit das Behältnis 10 trägt.

Der Begrenzungsbereich 15a bzw. 15b des jeweiligen Halteelementes 12b, 13b erstreckt sich vornehmlich in Längsrichtung L, wobei der Begrenzungsbereich 15a, 15b zu dem entsprechenden Auflagebereich 16a, 16b bevorzugt im Wesentlichen rechtwinklig angeordnet ist, jedoch auch in einem definierten Winkel zum entsprechenden Auflagebereich 16a, 16b angeordnet sein kann. Vornehmlich ist der Querschnitt - wie hier in Figur 2 gezeigt - der jeweiligen zweiten Halteelemente 12b, 13b im Wesentlichen L-förmig. Mittels des sich entlang einer ebenfalls im Wesentlichen in Längsrichtung L erstreckenden Wandung 4a des Tragrings 4 erstreckenden Begrenzungsbereichs 15a bzw. 15b ist es möglich das Behältnis 10 insbesondere gegen ein Verrutschen in radialer Richtung R sowie gegen ein Verkippen bzw. Verschwenken des Behältnisses 10 insbesondere während des Transportvorganges des Behältnisses 10 zu sichern. Unabhängig der Ausführungsform ist es ferner möglich, weitere Halteelemente vorzusehen, die das Behältnis 10 zusätzlich stabilisieren. Diese können beispielsweise am Tragring in Anlage geführt werden und können insbesondere so ausgebildet sein, wie das erste Halteelement in Fig. 3 zeigt. Insbesondere sind diese zusätzlichen Halteelemente an dem zweiten Halteelement 12b, 13b auf der geschlossenen Seite der Vorrichtung angeordnet.

Vorzugsweise wird aufgrund der Anordnung und Ausgestaltung der Halteelemente 12a, 12b, 13a und 13b ein im Wesentlichen direktes Kontaktieren bzw. Greifen des Behältnisses 10 an dessen Behältniswandung bzw. auch an dessen Mündungsbereich, wie dem Außengewinde (hier nicht gezeigt) vermieden. D.h., dass das Behältnis 10 im Wesentlichen lediglich indirekt über dessen Abrissring 5 und/oder dessen Tragring 4 kontaktiert bzw. gegriffen wird.

In Fig.3 ist eine Prinzipskizze eines Längsschnittes durch eine zweiten Ausführungsform der erfindungsgemäßen Vorrichtung 200 während des Haltens eines Behältnisses 100 gezeigt, wobei sich die zweite Ausführungsform der Vorrichtung 200 durch eine unterschiedliche Ausgestaltung der Halteelemente 112a, 112b, 113a und 113b im Vergleich zu den Halteelementen 12a, 12b, 13a und 13b der ersten Ausführungsform der Vorrichtung 20 unterscheidet.

Das erste Halteelement 112a bzw. 113a der jeweiligen Klammerelementarme 111 a, 111 b weist einen Querschnitt auf, welcher im Wesentlichen viereckförmig und vornehmlich rechteckig ausgebildet ist, wobei der Anlagerungsbereich 114a, 114b der ersten Halteelemente 112a, 113a, sich im Wesentlichen in Längsrichtung L des Behältnisses 100 erstreckt und dabei zumindest abschnittsweise eine Wandung des Behältnisses 100 kontaktiert. Das in Figur 3 gezeigte Behältnis 100 weist im Vergleich zu dem in Figur 2 gezeigten Behältnis 10 keinen Abrissring, sondern lediglich einen Tragring 4 auf, so dass zumindest der Anlagerungsbereich 114a, 114b des ersten Halteelementes 112a, 113a das Behältnis 100 direkt kontaktiert bzw. greift bzw. stützt, so dass insbesondere ein Verkippen des Behältnisses 100 in eine radiale Richtung R des Behältnisses 100 verhindert wird.

Der Auflagebereich 116a, 116b des zweiten Halteelementes 112b, 113b weist eine vergleichbare Ausgestaltung, wie der Auflagebereich 16a, 16b des in Figur 2 gezeigten zweiten Halteelementes 12b, 13b auf, und dient dementsprechend ebenfalls zum Tragen des Behältnisses 100 und damit zum Verhindern eines Verrutschens des Behältnisses 100 in Längsrichtung L nach unten.

Jedoch ist der Begrenzungsbereich 115a, 115b der zweiten Halteelemente 112b, 113b abweichend zum Begrenzungsbereich 15a, 15b der zweiten Halteelemente 12b, 13b der Vorrichtung 10 aus Figur 2 gestaltet. D.h., dass der Begrenzungsbereich 115a, 115b aus im Wesentlichen zwei Bereichen bzw. Abschnitten besteht, nämlich einem Abschnitt, welcher sich im Wesentlichen in Längsrichtung L entlang erstreckt und einem Abschnitt, welcher sich im Wesentlichen in radialer Richtung R entlang erstreckt. D.h., dass im Querschnitt betrachtet der jeweilige Begrenzungsbereich 115a, 115b bevorzugt eine Dreiecksform aufweist und insbesondere die Form eines rechtwinkligen Dreiecks, wobei die Hypotenuse bzw. ein Abschnitt bzw. Bereich der Hypotenuse dieses Dreiecks zumindest abschnittsweise Wandungen des Tragrings 5 kontaktieren. Die Bereiche 115a, 115b fungieren damit beispielsweise auch als Einführschrägen beim Umfassen bzw. Greifen des Behältnisses.

Demnach wird folglich die sich in Längsrichtung L erstreckende Wandung 4a sowie auch die sich in radialer Richtung R erstreckende und in Richtung eines Gewindes (hier nicht gezeigt) gerichtete Wandung 4c zumindest teilweise derart von dem Begrenzungsbereich 115a, 115b bzw. einer Wandung des Begrenzungsbereiches 115a, 115b kontaktiert, dass eine Bewegung des Behältnisses 100, welches auch in dieser Ausführungsform vorzugsweise ein Vorformling 100 ist, in radialer Richtung R sowie auch in Längsrichtung L verhindert wird, so dass das Behältnis 100 weder in Längsrichtung L verrutschen, noch in radialer Richtung R verkippen oder verrutschen kann.

Gemäß dieser Ausführungsform wird das Behältnis 100 vorzugsweise zum einen indirekt am Tragring 5, mittels der zweiten Halteelemente 112b, 113b, sowie direkt an einem Bereich einer Behältniswandung des Behältnisses 100 mittels der ersten Halteelemente 112a, 113a kontaktiert bzw. gegriffen bzw. gehalten.

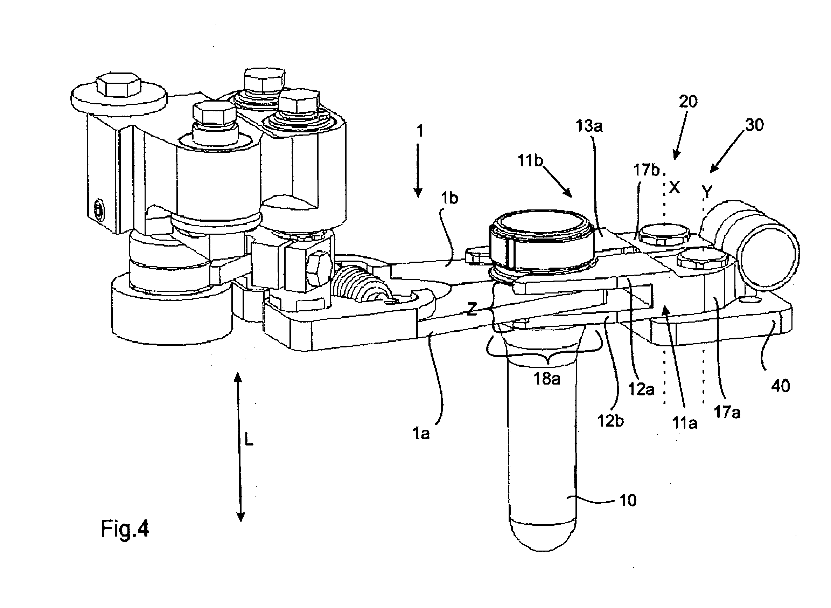

Fig.4 zeigt eine Prinzipskizze einer Ausführungsform der erfindungsgemäßen Vorrichtung 20 oder auch 200 beim Übergabevorgang des Behältnisses 10 oder auch 100 an oder von einer Ausführungsform einer Standard-Einfachklammer 1, wie diese beispielsweise bereits in Figur 1 aufgezeigt ist.

Die Vorrichtung 20 oder 200 kann dabei beispielsweise wie in Figur 2 oder auch wie in Figur 3 ausgestaltete Halteelemente 12a, 12b, 13a, 13b, 112a, 112b, 113a, 113b aufweisen, wobei hierbei bei der Beschreibung zur Figur 4 angenommen wird, dass eine Ausführungsform der Vorrichtung 20, wie in Figur 2 dargestellt, eingesetzt ist.

Das Behältnis 10 oder 100 selbst kann dabei einen Abrissring 5 und einen Tragring 4, wie bei dem Behältnis 10 in Figur 2 gezeigt oder auch lediglich einen Tragring 4, wie bei dem Behältnis 100 in Figur 3 gezeigt, aufweisen, wobei hierbei bei der Beschreibung der Figur 4 angenommen wird, dass das Behältnis 10 sowohl einen Tragring 4 als auch einen Abrissring 5 besitzt.

Die Vorrichtung 20 weist zwei Klammerelementarme 11a, 11b auf, welche jeweils als eine Art Doppelklammerelementarme ausgebildet sind, da jeder Klammerelementarm 11a, 11b zumindest zwei zueinander in Längsrichtung L beabstandet angeordnete Halteelemente 12a, 12b bzw. 13a, 13b aufweist.

Der Klammerelementarm 11a ist dabei um eine sich im Wesentlichen in Längsrichtung L des Behältnisses erstreckende Achse Y schwenkbar bzw. drehbar gelagert, während der Klammerelementarm 11b vorzugsweise um eine sich ebenfalls im Wesentlichen in Längsrichtung L des Behältnisses erstreckende Achse X schwenkbar bzw. drehbar gelagert ist, wobei die Schwenkachsen X und Y vorzugsweise zueinander parallel verlaufen.

Jeder Klammerelementarm 11a, 11 b weist einen Befestigungsbereich 17a, 17b und einen Klemmbereich 18a (der Klemmbereich des Klammerelementarmes 11 b ist in Fig.4 nicht sichtbar) auf, wobei insbesondere jedes Halteelement 12a, 12b, 13a, 13b der Klammerelementarme 11 a, 11b einen Klemmbereich 18a aufweisen, mittels welchem das Behältnis 10 an definierten Bereichen gegriffen bzw. kontaktiert wird.

Vorzugsweise wird demnach das Behältnis 10 an wenigstens vier Bereichen kontaktiert, wobei diese vier Kontaktbereiche zueinander beabstandet angeordnet sind. Vorzugsweise besteht kein Kontakt zwischen dem Behältnis 10 und den Haltelementen 12a, 12b, 13a, 13b bzw. dessen Klemmbereichen 18a in Bereichen des Behältnisses, welche zwischen den Kontaktbereichen selbst liegen.

Der Befestigungsbereich 17a, 17b des Klammerelementes 30, welches vornehmlich aus mindestens zwei Klammerelementarmen 11a, 11 b mit jeweils zwei Halteelementen 12a, 12b bzw. 13a, 13b besteht, dient dazu, die einzelnen Klammerelementarme 11 a, 11 b an einer Trageinrichtung 40 bzw. an einem Tragelement 40 derart anzuordnen, dass eine zueinander gerichtete bzw. auch eine voneinander weg gerichtete Bewegung der Klammerelementarme 11a, 11 b ermöglicht wird.

Vornehmlich weist die erfindungsgemäße Vorrichtung neben dem Klammerelement 30, auch ein Vorspannelement (hier nicht gezeigt) und/oder die Trageinrichtung 40 auf.

Eine Höhenjustierung der Klammerelementarme 11a und 12a bzw. des Klammerelementes 30 und insbesondere der Vorrichtung 20 erfolgt vorzugsweise mittels einer zentralen Welle (hier nicht gezeigt), welche die Klammerelementarme 11a, 11 b und insbesondere das Klammerelement 30, die beispielsweise an einem umlaufenden Ring (hier nicht gezeigt) angeordnet sind, entsprechend verstellt.

In einem Übergabebereich, d.h. in einem Bereich der Behandlungsanlage, in welchem das Behältnis 10 von einer Handhabungsvorrichtung an eine andere Handhabungsvorrichtung übergeben wird, greift beispielsweise eine Standard-Einfachklammer 1, wie diese auch bereits in Figur 1 aufgezeigt ist, in einen zwischen den Halteelementen 12a und 12b bzw. 13a und 13b in Längsrichtung L entstehenden Zwischenraum Z ein, um folglich mittels den entsprechenden Einfachklammern 1a, 1 b das Behältnis 10 in einem Greifbereich 6, wie beispielsweise in Figur 1 gezeigt, zu greifen bzw. zu kontaktieren.

Vorteilhaft ist es folglich möglich die erfindungsgemäße Vorrichtung in bereits bestehende Behandlungsanlagen zu integrieren, da diese ein Übernehmen bzw. ein Übergeben des zu behandelnden Behältnisses von bzw. zu einer bereits in der Anlage angeordneten Einfachklammer-Handhabungsvorrichtung ermöglicht, so dass der Transport des Behältnisses nicht negativ beeinträchtigt oder gar gestoppt und im Wesentlichen jeder Behandlungsprozess ohne negative Beeinträchtigungen durchgeführt werden kann.

### Bezugszeichenliste

- 1: Standard-Einfachklammer
- 1a, 1b: Einfachklammerarm
- 2a, 2b: Klemmbereich
- 3a, 3b: Befestigungsbereich
- 4: Tragring
- 4a, 4b, 4c: Wandung des Tragringes
- 5: Abrissring
- 5a, 5b, 5c: Wandung des Abrissrings
- 6: Greifbereich
- 7: Gewinde (Außengewinde)
- 8: (Mündungs-) Öffnung
- 9: Bodenbereich
- 10: Behältnis / Vorformling
- 11a, 11b: Klammerelementarm
- 12a, 13a: erstes Halteelement
- 12b, 13b: zweites Halteelement
- 14a, 14b: Anlagerungsbereich
- 15a, 15b: Begrenzungsbereich
- 16a, 16b: Auflagebereich
- 17a, 17b: Befestigungsbereich
- 18a, 18b: Klemmbereich
- 20: Vorrichtung
- 30: Klammerelement
- 40: Tragelement / Trageinrichtung
- 100: Behältnis / Vorformling
- 111a, 111b: Klammerelementarm
- 112a, 113a: erstes Halteelement
- 112b, 113b: erstes Halteelement
- 114a, 114b: Anlagerungsbereich
- 115a, 115b: Begrenzungsbereich
- 116a, 116b: Auflagebereich
- 200: Vorrichtung
- L: Längsrichtung
- M: Mündungsbereich
- R: radiale Richtung
- X: Schwenkachse
- Y: Schwenkachse
- Z: Zwischenraum

## Patentansprüche

1. Vorrichtung (20, 200) zum Halten von Behältnissen (10, 100) zumindest während eines Transportvorganges und/oder eines Bearbeitungsvorganges der Behältnisse (10, 100), welche zumindest im Mündungsbereich (M) einen Tragring (4) und/oder einen in eine Längsrichtung (L) des Behältnisses (10, 100) zum Tragring (4) beabstandet angeordneten Abrissring (5) aufweisen,
**dadurch gekennzeichnet, dass**
die Vorrichtung (20, 200) ein Klammerelement (30) mit mindestens zwei Klammerelementarmen (11 a, 11 b, 111 a, 111 b) aufweist, wobei jeder der Klammerelementarme (11 a, 11b, 111 a, 111b) mindestens ein erstes Halteelement (12a, 13a, 112a, 113a) und ein zweites Halteelement (12b, 13b, 112b, 113b) aufweist, wobei die Halteelemente (12a, 12b, 13a, 13b, 112a, 112b, 113a, 113b) derart gestaltet sind, dass diese zumindest zeitweise gleichzeitig und zumindest abschnittsweise in der Längsrichtung (L) des Behältnisses (10, 100) zueinander versetzte und in Umfangsrichtung des Behältnisses (10, 100) zueinander beabstandete Bereiche des Behältnisses (10, 100) kontaktieren.

2. Vorrichtung nach Anspruch 1,
**dadurch gekennzeichnet, dass**
das erste Halteelement (12a, 13a) geeignet ist, zumindest abschnittsweise einen Bereich des Abrissrings (5) des Behältnisses (10) zu kontaktieren, und/oder das dazu beanstandet angeordnete zweite Halteelement (12b, 13b) geeignet ist, zumindest abschnittsweise einen Bereich des Tragrings (4) zu kontaktieren.

3. Vorrichtung nach Anspruch 1,
**dadurch gekennzeichnet, dass**
das erste Halteelement (112a, 113a) geeignet ist, zumindest einen Abschnitt des Umfanges des Behältnisses (100) zu kontaktieren und/oder das dazu beanstandet angeordnete zweite Halteelement (112b, 113b) geeignet ist, zumindest abschnittsweise einen Bereich des Tragrings (4) zu kontaktieren.

4. Vorrichtung nach einem der vorangegangenen Ansprüche,
**dadurch gekennzeichnet, dass**
jeder Klammerelementarm (11a, 11b, 111a, 111b) einen Befestigungsbereich 17a, 17b) zum Befestigen des Klammerelementarms (11a, 11b, 111a, 111 b) an einem Tragelement (40), und einen Klemmbereich (18a) zum Kontaktieren zumindest eines Abschnittes des Behältnisses (10, 100) aufweist.

5. Vorrichtung nach einem der vorangegangenen Ansprüche,
**dadurch gekennzeichnet, dass**
die Klammerelementarme (11a, 11b, 111 a, 111 b) aktiv oder passiv steuerbar sind.

6. Vorrichtung nach einem der vorangegangenen Ansprüche,
**dadurch gekennzeichnet, dass**
wenigstens einer der Klammerelementarme (11a, 11b, 111 a, 111 b) einteilig ausgebildet ist.

7. Vorrichtung nach einem der vorangegangenen Ansprüche,
**dadurch gekennzeichnet, dass**
das Behältnis (10, 100) durch zumindest ein Halteelement (12a, 12b, 13a, 13b, 112a, 112b, 113a, 113b) von wenigstens einem der Klammerelementarme (11a, 11b, 111 a, 111 b) kraftschlüssig und/oder formschlüssig erfassbar ist.

8. Vorrichtung nach einem der vorangegangenen Ansprüche,
**dadurch gekennzeichnet, dass**
die Vorrichtung (20, 200) ein Vorspannelement aufweist, um die Klammerelementarme (11a, 11b, 111 a, 111 b) vorzuspannen.

9. Vorrichtung nach Anspruch 8,
**dadurch gekennzeichnet, dass**
das Vorspannelement ein Federelement und/oder ein magnetisches Element ist.

10. Vorrichtung nach einem der vorangegangenen Ansprüche,
**dadurch gekennzeichnet, dass**
das zweite Halteelement (12b, 13b, 112b, 113b) einen Auflagebereich (16a, 16b) zum Sichern des Behältnisses (10, 100) gegen eine Verschiebung in Längsrichtung (L) und/oder einen Begrenzungsbereich (15a, 15b, 115a, 115b) zum Begrenzen einer Verschiebung des Behältnisses (10, 100) in radialer Richtung (R) und/oder in Längsrichtung (L) aufweist.

11. Vorrichtung nach einem der vorangegangenen Ansprüche,
**dadurch gekennzeichnet, dass**
das erste Halteelement (12a, 13a, 112a, 113a) einen Anlagerungsbereich (14a, 14b, 114a, 114b) zum Verhindern eines Verkippens des Behältnisses (10, 100) und/oder einer Verschiebung des Behältnisses (10, 100) in Längsrichtung (L) aufweist.

12. Vorrichtung nach einem der vorangegangenen Ansprüche,
**dadurch gekennzeichnet, dass**
das erste Halteelement (12a, 13a, 112a, 113a) und das zweite Halteelement (12b, 13b, 112b, 113b) von zumindest einem Klammerelementarm (11a, 11b, 111 a, 111 b) in Längsrichtung (L) des Behältnisses (10, 100) derart beabstandet voneinander angeordnet sind, dass zwischen dem ersten Halteelement (12a, 13a, 112a, 113a) und dem zweiten Halteelement (12b, 13b, 112b, 113b)ein Zwischenraum (Z) ausgebildet ist.

13. Verfahren zum Halten von Behältnissen (10, 100) zumindest während eines Transportvorganges und/oder eines Bearbeitungsvorganges der Behältnisse (10, 100), welche zumindest einen in einem Mündungsbereich (M) befindlichen Tragring (4) und/oder einen zum Tragring (4) in Längsrichtung (L) des Behältnisses (10, 100) beabstandet angeordneten Abrissring (5) aufweisen,
**dadurch gekennzeichnet dass**
das Behältnis (10, 100) mittels einer Vorrichtung (20, 200) zum Halten von Behältnissen (10, 100), welche wenigstens ein mindestens zwei Klammerelementarmen (11a, 11b, 111 a, 111 b) aufweisendes Klammerelement (30) aufweist, im Mündungsbereich (M) des Behältnisses (10, 100) gegriffen wird, wobei jeweils ein erstes Halteelement (12a, 13a, 112a, 113a) der Klammerelementarme (11a, 11b, 111a, 111b) zumindest abschnittsweise einen Bereich des Mündungsbereiches (M) des Behältnisses (10, 100) oder einen Bereich des Abrissrings (5) kraftschlüssig und/oder formschlüssig kontaktiert, während jeweils ein zweites Halteelement (12b, 13b, 112b, 113b) der Klammerelementarme (11a, 11b, 111 a, 111 b) zumindest abschnittsweise einen Bereich des Tragrings (4) kraftschlüssig und/oder formschlüssig kontaktiert, wobei das Behältnis (10, 100) mittels den Halteelementen (12a, 12b ,13a, 13b, 112a, 112b, 113a, 113b) im Wesentlichen an zwei sich in Längsrichtung (L) des Behältnisses (10, 100) voneinander beabstandeten und in Umfangsrichtung des Behältnisses (10, 100) voneinander beabstandeten Bereichen des Behältnisses (10, 100) gegriffen wird.

14. Verfahren gemäß Anspruch 13,
**dadurch gekennzeichnet, dass**
in einem Übergabebereich des Behältnisses (10, 100) ein weiteres zumindest zwei Klammerelementarme (1a, 1 b) aufweisendes Klammerelement (1) in einen durch die in Längsrichtung (L) des Behältnisses (10, 100) voneinander beabstandet angeordne- ten Halteelemente (12a, 12b ,13a, 13b, 112a, 112b, 113a, 113b) zumindest eines Klammerelementarmes (11 a, 11 b, 111a, 111b) gebildeten Zwischenraum (Z) eingreift, um das Behältnis (10, 100) von der Vorrichtung (20, 200) zu übernehmen oder der Vorrichtung (20, 200) zu übergeben

15. Verfahren gemäß Anspruch 14,
**dadurch gekennzeichnet, dass**
das Klammerelement (30) einen Vorformling (10, 100) zumindest während eines Transportvorganges und/oder Bearbeitungsvorganges des Vorformlings (10, 100) greift und/oder hält.

## Claims

1. An apparatus (20, 200) for holding containers (10, 100) at least during a conveying procedure and/or a treatment procedure of the containers (10, 100), which at least in the aperture region (M) have a carrying ring (4) and/or a ring pull (5) arranged at a distance from the carrying ring (4) in a longitudinal direction (L) of the container (10, 100), **characterized in that** the apparatus (20, 200) has a clip element (30) with at least two clip element arms (11 a, 11 b, 111 a, 111 b), wherein each of the clip element arms (11 a, 11 b, 111 a, 111 b) has at least one first holding element (12a, 13a, 112a, 113a) and one second holding element (12b, 13b, 112b, 113b), wherein the holding elements (12a, 12b, 13a, 13b, 112a, 112b, 113a, 113b) are designed in such a way that they contact regions of the container (10, 100) arranged at a distance from one another in the peripheral direction of the container (10, 100) and offset from one another in the longitudinal direction (L) of the container (10, 100) at least for a time simultaneously and at least in sections.

2. An apparatus according to claim 1, **characterized in that** the first holding element (12a, 13a) is suitable for contacting at least in sections a region of the ring pull (5) of the container (10), and/or the second holding element (12b, 13b) arranged at a distance therefrom is suitable for contacting at least in sections a region of the carrying ring (4).

3. An apparatus according to claim 1, **characterized in that** the first holding element (112a, 113a) is suitable for contacting at least one portion of the periphery of the container (100), and/or the second holding element (112b, 113b) arranged at a distance therefrom is suitable for contacting at least in sections one portion of the carrying ring (4).

4. An apparatus according to any one of the preceding claims, **characterized in that** each clip element arm (11 a, 11 b, 111 a, 111 b) has a fastening region (17a, 17b) for fastening the clip element arm (11 a, 11 b, 111 a, 111 b) on a carrying element (40), and a clamping region (18a) for contacting at least one portion of the container (10, 100).

5. An apparatus according to any one of the preceding claims, **characterized in that** the clip element arms (11 a, 11 b, 111 a, 111 b) are capable of being controlled in an active or passive manner.

6. An apparatus according to any one of the preceding claims, **characterized in that** at least one of the clip element arms (11 a, 11 b, 111 a, 111 b) is formed in one piece.

7. An apparatus according to any one of the preceding claims, **characterized in that** the container (10, 100) is capable of being gripped in a non-positively and/ or positively locking manner by at least one holding element (12a, 12b, 13a, 13b, 112a, 112b, 113a, 113b) of at least one of the clip element arms (11 a, 11 b, 111a, 111b).

8. An apparatus according to any one of the preceding claims, **characterized in that** the apparatus (20, 200) has a pre-stressing element in order to pre-stress the clip element arms (11 a, 11 b, 111 a, 111 b).

9. An apparatus according to claim 8, **characterized in that** the pre-stressing element is a spring element and/or a magnetic element.

10. An apparatus according to any one of the preceding claims, **characterized in that** the second holding element (12b, 13b, 112b, 113b) has an abutment region (16a, 16b) for securing the container (10, 100) against displacement in the longitudinal direction (L) and/or a limiting region (15a, 15b, 115a, 115b) for limiting a displacement of the container (10, 100) in the radial direction (R) and/or in the longitudinal direction (L).

11. An apparatus according to any one of the preceding claims, **characterized in that** the first holding element (12a, 13a, 112a, 113a) has an attachment region (14a, 14b, 114a, 114b) for preventing a tilting of the container (10, 100) and/or a displacement of the container (10, 100) in the longitudinal direction (L).

12. An apparatus according to any one of the preceding claims, **characterized in that** the first holding element (12a, 13a, 112a, 113a) and the second holding element (12b, 13b, 112b, 113b) of at least one clip element arm (11 a, 11 b, 111 a, 111 b) are arranged at a distance from each other in the longitudinal direction (L) of the container (10, 100) in such a way that an interspace (Z) is formed between the first holding element (12a, 13a, 112a, 113a) and the second holding element (12b, 13b, 112b, 113b).

13. A method of holding containers (10, 100) at least during a conveying procedure and/or a treatment procedure of the containers (10, 100), which have at least one carrying ring (4) present in the aperture region (M) and/or a ring pull (5) arranged at a distance from the carrying ring (4) in the longitudinal direction (L) of the container (10, 100), **characterized in that** the container (10, 100) is gripped in the aperture region (M) of the container (10, 100) by means of an apparatus (20, 200) for holding containers (10, 100) which has at least one clip element (30) comprising at least two clip element arms (11 a, 11 b, 111 a, 111 b), wherein a first holding element (12a, 13a, 112a, 113a) of the clip element arms (11 a, 11 b, 111 a, 111 b) contacts in each case at least in sections a region of the aperture region (M) of the container (10, 100) or a region of the pull ring (5) in a non-positively and/or positively locking manner, whilst a second holding element (12b, 13b, 112b, 113b) of the clip element arms (11 a, 11 b, 111 a, 111 b) contacts in each case at least in sections a region of the carrier ring (4) in a non-positively and/or positively locking manner, wherein the container (10, 100) is gripped by means of the holding elements (12a, 12b, 13a, 13b, 112a, 112b, 113a, 113b) essentially at two regions of the container (10, 100) arranged at a distance from each other in the longitudinal direction (L) of the container (10, 100) and arranged at a distance from each other in the peripheral direction of the container (10, 100).

14. A method according to claim 13, **characterized in that** in a transfer region of the container (10, 100) a further clip element (1) comprising at least two clip element arms (1 a, 1 b) engages in an interspace (Z) formed by the holding elements (12a, 12b, 13a, 13b, 112a, 112b, 113a, 113b) of at least one clip element arm (11 a, 11 b, 111 a, 111 b) arranged at a distance from each other in the longitudinal direction (L) of the container (10, 100) in order to take over the container (10, 100) from the apparatus (20, 200) or to deliver it to the apparatus (20, 200).

15. A method according to claim 14, **characterized in that** the clip element (30) grips and/or holds a pre-form (10, 100) at least during a conveying procedure and/or a treatment procedure of the pre-form (10, 100).

## Revendications

1. Dispositif (20, 200) pour le maintien de récipients (10, 100) au moins pendant une phase de transport et/ou une phase de traitement des récipients (10, 100), lesquels présentent au moins dans leur zone d'embouchure (M) une bague de support (4) et/ou une bague d'arrachage (5) disposée à intervalle de la bague de support (4) dans le sens de la longueur (L) du récipient (10, 100),
**caractérisé en ce que**
le dispositif (20, 200) comporte un élément à pince (30) avec au moins deux bras d'élément à pince (11 a, 11 b, 111 a, 111 b), chaque bras d'élément à pince (11 a, 11 b, 111 a, 111 b) présentant au moins un premier élément de maintien (12a, 13a, 112a, 113a) et un deuxième élément de maintien (12b, 13b, 112b, 113b), les éléments de maintien (12a, 12b, 13a, 13b, 112a, 112b, 113a, 113b) étant configurés de manière à contacter au moins simultanément et au moins en sections des zones du récipient (10, 100) décalées entre elles dans le sens de la longueur (L) du récipient (10, 100) et espacées entre elles dans le sens de la périphérie du récipient (10, 100).

2. Dispositif selon la revendication 1,
**caractérisé en ce que**
le premier élément de maintien (12a, 13a) est adapté pour contacter au moins en sections une zone de la bague d'arrachage (5) du récipient (10), et/ou **en ce que** le deuxième élément de maintien (12b, 13b) espacé de celui-ci est adapté pour contacter au moins en sections une zone de la bague de support (4).

3. Dispositif selon la revendication 1,
**caractérisé en ce que**
le premier élément de maintien (112a, 113a) est adapté pour contacter au moins une section de la périphérie du récipient (100), et/ou **en ce que** le deuxième élément de maintien (112b, 113b) espacé de celui-ci est adapté pour contacter au moins en sections une zone de la bague de support (4).

4. Dispositif selon l'une des revendications précédentes,
**caractérisé en ce que**
chaque bras d'élément à pince (11 a, 11 b, 111 a, 111 b) présente une zone de fixation (17a, 17b) pour la fixation du bras d'élément à pince (11 a, 11 b, 111 a, 111 b) sur un élément de support (40), et une zone de serrage (18a) pour contacter au moins une section du récipient (10, 100).

5. Dispositif selon l'une des revendications précédentes,
**caractérisé en ce que**
les bras d'élément à pince (11a, 11 b, 111a, 111b) peuvent être commandés de manière active ou passive.

6. Dispositif selon l'une des revendications précédentes,
**caractérisé en ce**
**qu'**au moins un des bras d'élément à pince (11 a, 11 b, 111 a, 111 b) est constitué d'une seule pièce.

7. Dispositif selon l'une des revendications précédentes,
**caractérisé en ce que**
le récipient (10, 100) peut être saisi par adhérence et/ou par engagement positif par au moins un élément de maintien (12a, 12b, 13a, 13b, 112a, 112b, 113a, 113b) d'au moins un des bras d'élément à pince (11a, 11b, 111a, 111b).

8. Dispositif selon l'une des revendications précédentes,
**caractérisé en ce que**
le dispositif (20, 200) comporte un élément de précontrainte pour pré-contraindre les bras d'élément à pince (11 a, 11 b, 111 a, 111 b).

9. Dispositif selon la revendication 8,
**caractérisé en ce que**
l'élément de précontrainte est un élément à ressort et/ou un élément magnétique.

10. Dispositif selon l'une des revendications précédentes,
**caractérisé en ce que**
le deuxième élément de maintien (12b, 13b, 112b, 113b) présente une zone d'appui (16a, 16b) pour le blocage du récipient (10, 100) contre un déplacement dans le sens de la longueur (L) et/ou une zone de limitation (15a, 15b, 115a, 115b) pour limiter un déplacement du récipient (10, 100) dans la direction radiale (R) et/ou dans le sens de la longueur (L).

11. Dispositif selon l'une des revendications précédentes,
**caractérisé en ce que**
le premier élément de maintien (12a, 13a, 112a, 113a) présente une zone de fixation (14a, 14b, 114a, 114b) pour empêcher un basculement du récipient (10, 100) et/ou un déplacement du récipient (10, 100) dans le sens de la longueur (L).

12. Dispositif selon l'une des revendications précédentes,
**caractérisé en ce que**
le premier élément de maintien (12a, 13a, 112a, 113a) et le deuxième élément de maintien (12b, 13b, 112b, 113b) d'au moins un bras d'élément à pince (11 a, 11 b, 111 a, 111 b) sont espacés l'un de l'autre dans le sens de la longueur (L) du récipient (10, 100), de manière à former un interstice (Z) entre le premier élément de maintien (12a, 13a, 112a, 113a) et le deuxième élément de maintien (12b, 13b, 112b, 113b).

13. Procédé de maintien de récipients (10, 100) au moins pendant une phase de transport et/ou une phase de traitement des récipients (10, 100), lesquels présentent au moins dans leur zone d'embouchure (M) une bague de support (4) et/ou une bague d'arrachage (5) disposée à intervalle de la bague de support (4) dans le sens de la longueur (L) du récipient (10, 100),
**caractérisé en ce que**
le récipient (10, 100) est saisi dans la zone d'embouchure (M) du récipient (10, 100) par un dispositif (20, 200) pour le maintien de récipients (10, 100) comportant au moins un élément à pince (30) avec au moins deux bras d'élément à pince (11a, 11 b, 111a, 111b), un premier élément de maintien (12a, 13a, 112a, 113a) des bras d'élément à pince (11a, 11 b, 111a, 111 b) contactant chaque fois au moins en sections une section de la zone d'embouchure (M) du récipient (10, 100) ou une zone de la bague d'arrachage (5) par adhérence et/ou par engagement positif, cependant qu'un deuxième élément de maintien (12b, 13b. 112b, 113b) des bras d'élément à pince (11 a, 11 b, 111 a, 111 b) contacte chaque fois au moins en sections une zone de la bague de support (4) par adhérence et/ou par engagement positif, le récipient (10, 100) étant saisi par les éléments de maintien (12a, 12b ,13a, 13b, 112a, 112b, 113a, 113b) sensiblement sur deux zones du récipient (10, 100) espacées l'une de l'autre dans le sens de la longueur (L) du récipient (10, 100) et espacées entre elles dans le sens de la périphérie du récipient (10, 100).

14. Procédé selon la revendication 13,
**caractérisé en ce que**
dans une zone de transition du récipient (10, 100) un autre élément à pince (1) pourvu d'au moins deux bras d'élément à pince (1 a, 1 b) s'engage dans un interstice (Z) formé par les éléments de maintien (12a, 12b, 13a, 13b, 112a, 112b, 113a, 113b) d'au moins un bras d'élément à pince (11 a, 11 b, 111 a, 111 b) espacés l'un de l'autre dans le sens de la longueur (L) du récipient (10, 100), pour reprendre le récipient (10, 100) du dispositif (20, 200) ou pour le transférer au dispositif (20, 200).

15. Procédé selon la revendication 14,
**caractérisé en ce que**
l'élément à pince (30) saisit et/ou maintient une préforme (10, 100) au moins pendant une phase de transport et/ou une phase de traitement de la préforme (10, 100).
